# EUROPEAN PATENT SPECIFICATION

(11) **EP 2 542 799 B1**
(45) Date of publication and mention of the grant of the patent: **04.03.2015**
(21) Application number: 11718242.8
(22) Date of filing: 16.02.2011
(51) Int. Cl.: F16F 9/02, F16F 9/516, F16F 9/48

(54) **PNEUMATIC SPRING**
GASDRUCKFEDER
RESSORT PNEUMATIQUE

(30) Priority: 18.02.2010 CZ 20100128
(43) Date of publication of application: 09.01.2013
(73) Proprietor: Jakl, Albin, 170 00 Praha 7 (CZ)
(72) Inventor: KNOBLOCH, Rafael, 169 00 Praha 6 (CZ)
(74) Representative: Fischer, Michael
(86) International application number: PCT/CZ2011/000018
(87) International publication number: WO 2011/100936

(56) References cited:
- FR-A- 398 355
- FR-A- 516 275
- GB-A- 893 215
- US-A- 3 063 518
- US-A- 3 478 846

## Description

### Field of Technology

The invention pertains to a pneumatic spring, especially for door checks, consisting of a hollow working cylinder with a first end being adapted for fixing to one suspending object and a second end being closed, a sealed piston rod going through this second end, one free end of the sealed piston rod going out of the working cylinder is adapted for fixing to a second suspended object and the second free end extending into a working space of the working cylinder wherein the working space being closed with the bottom of the working cylinder first end or with a piston connected with the second free end of the piston rod and interconnected through interconnection holes of the working cylinder with the outer storage space for a work medium.

An example of such a spring is shown in FR 398 355 A, which is considered as being representative of the closet prior art.

### State of the Art

State of the art knows pneumatic springs having their working spaces interconnected with outer storage spaces. Various means are used to damp the countermotion of the pneumatic spring, e.g. valves throttling the working medium flowing between the working space and outer storage space. The disadvantages of the solutions known to date include mainly their big size, complexity, difficult manufacture and insufficient reliability. The objective of the invention is to eliminate those shortages of state-of-the-art pneumatic springs. The objective of the invention is a pneumatic spring, in which the piston moves quickly with low or no resistance in one direction and slowly with resistance in the opposite direction and speed of countermotion in the opposite direction is controlled by pre-selected dependence on the position of the piston. The objective of the invention is a pneumatic spring, which can be used and reset between strength pushing and dampened pulling of the piston and strength pulling and dampened pushing of the piston. The objective of the invention is a pneumatic spring featuring the aforementioned characteristics, in which the extent and progress of damping and speed of countermotion can be adjusted using simple means. The objective of the invention is a pneumatic spring featuring the aforementioned characteristics, high efficiency and high reliability, which can be manufactured both in very small and very big sizes.

### Summary of the Invention

The objective of the invention is met by a pneumatic spring, consisting of a hollow working cylinder with a first end being adapted for fixing to one suspended object and with a second end being closed, a sealed piston rod going through this second end, one free end of the sealed piston rod going out of the working cylinder is adapted for fixing to a second suspended object and the second free end extending into a working space of the working cylinder, the working space being closed with the bottom of the working cylinder first end or with a piston connected with the second free end of the piston rod and interconnected through interconnection holes of the working cylinder with an outer storage space of a work medium, wherein according to the invention, a cylindrical gear pivot is seated coaxially with the piston rod in the second end of the working cylinder, the end of the gear pivot going out of the working cylinder is fitted with control means for rotating and/or axially moving the gear pivot, and the other end of the gear pivot extending into the working space is fitted with axial stops to demarcate the axial movement of a throttle ring seated on the gear pivot or on the piston rod for movement between a first position to close the work medium flow between the working space and outer storage space and a second position to release the working medium flow between the working space and outer storage space.

With advantage the throttle ring can be seated to slide on the end of the gear pivot, the end of the gear pivot extending into the working space, the throttle ring seating between the axial stops, and with its tapered outer perimeter or face, in the position closing the working medium flow, bearing to the inner shoulder of the working cylinder, the inner shoulder arranged between the piston or bottom and interconnection holes wherein the end of the gear pivot going out of the working cylinder is provided with actuating means to axially move the gear pivot. With advantage the actuating means for axial moving of the gear pivot can be formed by the radial pivot extending into the guide groove of the sliding-bloc guide connected with the piston rod for rotation of the gear pivot and by the peripheral guide groove with axial rise, the peripheral guide groove receiving a guide pin connected with the second end of the working cylinder to transform the rotation movement of the gear pivot to axial movement. With advantage the throttle ring seated in a sliding and rotation way on the pivot rod can be in gear with the end of the gear pivot interacting with the working space for rotating the throttle ring and the interconnection holes are arranged in the working cylinder wall opposite to the throttle ring in one of its limit positions between axial stops wherein the end of the gear pivot going out of the working cylinder is fitted with actuating means to rotate the gear pivot. With advantage the end of the gear pivot extending into the working cylinder can be fitted with axial forks, which go through the axial guide grooves of the throttle ring, being provided on their free ends with radial projections for the axial stop of the throttle ring. With advantage the actuating means for rotating the gear pivot can be formed by a radial pivot reaching the guide groove of the sliding-bloc guide connected with the piston rod. With advantage the throttle ring can be fitted with a carrier for carrying in the direction of the piston rod movement, and the carrier for carrying of the throttle ring can be formed by a rubber O-ring arranged between the throttle ring and the piston rod. With advantage the sliding-bloc guide can be formed in the control cylinder, the bottom of which is fixed to a free end of the piston rod going out of the working cylinder. With advantage the working space of the working cylinder can be filled with pressurized working medium, or the working space of the working cylinder can be a vacuum.

Advantages of the pneumatic spring-invention are mainly that the piston movement is quick in one direction with low or no resistance, while the piston movement in the opposite direction is slow and with resistance, whereas the speed of counter-motion in the opposite direction can be controlled either by pre-selected setup or depending on the depression or extension of the pneumatic spring, i.e. depending on the position of the piston. The pneumatic spring according to the invention can be used and reset between strength compression with a dampened pushing out of the piston and strength expansion with a dampened pushing in of the piston. The pneumatic spring according to the invention can be adjusted to control the extent and progress of damping and speed of countermotion using simple means. The pneumatic spring according to the invention features high efficiency and high reliability, it can be used in many fields of technology and it can be manufactured both in very small and very big sizes.

### Summary of Figures in Drawings

The invention is depicted in more details using drawings, where representing
Fig. 1 a longitudinal cross-section of the pneumatic spring with a throttle ring on a pivot rod;
Fig. 2 a set of the gear pivot according to Fig. 1
Fig. 3 a longitudinal cross-section of the pneumatic spring with a throttle ring on a pivot rod and pressure working space in the pushing working position;
Fig. 4 a longitudinal cross-section of the pneumatic spring with a throttle ring on a pivot rod and pressure working space in the pulling working position;
Fig. 5 a longitudinal cross-section of the pneumatic spring with a throttle ring on a pivot rod and vacuum working space in the pushing working position;
Fig. 6 a longitudinal cross-section of the pneumatic spring with a throttle ring on a pivot rod and vacuum working space in the pulling working position;
Fig. 7 a longitudinal cross-section of the pneumatic spring with a throttle ring on a pivot rod and vacuum working space and carrier, consisting of outer rubber rings, in the pushing working position;
Fig. 8 a longitudinal cross-section of the pneumatic spring according to Fig. 7 in the pulling working position;
Fig. 9 a longitudinal cross-section of the pneumatic spring with a throttle ring on a pivot rod and pressure working space in the pushing working position;
Fig. 10 a longitudinal cross-section of the pneumatic spring according to Fig. 9 in the pulling working position;
Fig. 11 a longitudinal cross-section of the pneumatic spring with a throttle ring on a pivot rod and manually adjustable gear pivot;
Fig. 12 a longitudinal cross-section of the pneumatic spring
with a throttle ring on a pivot rod in the pushing working position;
Fig. 13 a longitudinal cross-section of the pneumatic spring with a throttle ring on a pivot rod in the pulling working position;
Fig. 14 a longitudinal cross-section of the gear pivot according to Fig. 12 with a throttle ring with skewed outer perimeter;
Fig. 15 a longitudinal cross-section of the gear pivot according to Fig. 12 with a throttle ring of cylindrical form

### Exemplary Execution of the Invention

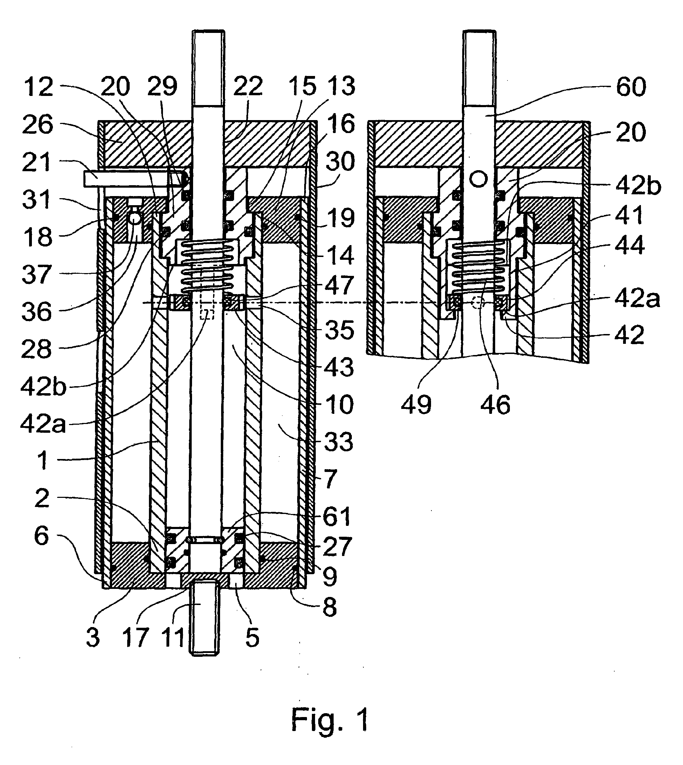

According to Fig. 1, the pneumatic spring consists of a working cylinder 1; its first end 2 is pressed into the countersink of the flat circular first bottom 3. In the first circular bottom 3 there are radial interconnection holes 5, symmetrical to the working cylinder axis 1, connecting the interior of the working cylinder 1 with the environment. The outer perimeter of the circular first bottom 3 is pressed into the first end 6 of the outer cylinder 7, which is arranged symmetrically round the working cylinder 1. The contact cylindrical surfaces between the first end 6 of the outer cylinder 7 and outer perimeter of the circular first bottom 3. of the working cylinder 1 are sealed with sealing 8, and the contact cylindrical surfaces between the cylindrical countersink in the circular bottom 3 of the working cylinder 1 and the outer perimeter of the working cylinder 1 are sealed with sealing 9. On the outer side of the first bottom 3 there is threaded countersink 17 in the axis of the working cylinder 1, in which one end of the coupling pin 11 is threaded; its second free end is also fitted with thread for connection with non-depicted suspended mass, e.g. a door. The opposite second end 12 of the working cylinder 1 is pressed into countersink 14 of the circular second bottom 13, which is also flat and its outer perimeter is pressed into the second end 16 of the outer cylinder 7 arranged symmetrically round the axis of the working cylinder 1. The contact cylindrical surfaces between the second end 16 of the outer cylinder 7 and outer perimeter of the circular second bottom 13 of the working cylinder 1 are sealed with sealing 18, and the contact cylindrical surfaces between the cylindrical countersink 14 in the circular bottom 13 and the outer perimeter of the second end 12 of the working cylinder 1 are sealed with sealing 19. The circular second bottom 13 is fitted with a central hole 15 in the axis of the working cylinder 1. In the inner shoulder of the second end 12 of the working cylinder 1 there is a gear pivot 20 of cylindrical form, seated in a rotation way with its outer shoulder; its one end goes through the second bottom 13 of the working cylinder 1 to go out axially from the second bottom 13. The gear pivot 20, seated in a rotation way in the second end 12 or second bottom 13 of the working cylinder 1, is fitted on its part going out of the second bottom 13 with a radial pivot 21 for rotation of the gear pivot 20. The rotation seating of the gear pivot 20 can be made also in the central through-hole 15 of the second bottom 13 in the working cylinder 1 or only in that central hole 15. The outer shoulder of the gear pivot 20 is sealed with mobile sealing 28 against the other end 12 of the working cylinder 1. The gear pivot 21 is fitted in its axis with a central through-hole 22, through which a piston rod 60 goes. The piston rod 60 is sealed with the sealing 29 in the inner wall of the central hole against the central hole 22. The end of the piston rod 60 reaching the working space 10 of the working cylinder 1 is connected with a piston 61, for example using a distance ring seated in the edge groove of the piston ring 60. The piston 61 is seated in a movable way in the working cylinder 1 and sealed against the working cylinder 1 using a mobile sealing 27. The free end of the piston rod 60 going out of the working cylinder 1 through the central hole 22 of the gear pivot 20 is fitted with thread to connect to a non-depicted post, for example door-post. On the piston rod 60 there is a flat circular third bottom 26 pressed into the piston rod 60 at the point going out in every position of the piston 61 from the working space 10 of the working cylinder 1; pressed into its outer edge is a control cylinder 30, which forms a piece surrounding from the outer side the outer cylinder 7 in the pushed-in position of the piston rod 60 with a piston 61. The inner diameter of the control cylinder 30 should be slightly larger rather than the outer diameter of the outer cylinder 7. A part of the cylindrical wall of the control cylinder 30, forming the piece, is fitted with a formed guide groove 31 to control the radial pivot 21. When pushed or pulled, the piston rod 60 carries the control cylinder 30 and side walls of the formed guide groove 31 in the cylindrical wall of the control cylinder 30 gear with the radial pivot 21, rotating the gear pivot 20. The formed guide groove 31 is made with advantage as a single groove and the radial pivot 21 moves in the same formed guide groove 31 when the piston rod 60 is pulled out in one direction and pushed into in the opposite direction. The working space 10 of the working cylinder 1 is interconnected with the outer storage space 33 for working medium, which can be created, for example, in the space between the working cylinder 1 and the outer cylinder 7. Interconnection is made using radial connecting through-holes 35 made in the wall of the working cylinder 1 with advantage on the side of the second end 12 of the working cylinder 1. Two radial connecting holes 35 are made, facing each other, with advantage in the wall of the working cylinder 1. In the storage space 33 and in the working space 10 according to Fig 1, there is overpressure compared to the environment. That is why a filling hole 36 is made in the second bottom 13, interconnecting the storage space 33 and the environment. The filling hole 36 is closed from the side of the storage space 33 with a return valve 37. The gear pivot 20 is fitted on its inner side facing the working space 10 with a fork with two axial arms 41, which are fitted on their free ends with radial stumps 42 with axial stops 42a. The inner face of the gear pivot 20 facing the working space 10 forms the axial stop 42b for the cylindrical throttle ring 43, which is seated in a sliding way on the piston rod 60; its outer perimeter matches the inner diameter of the working cylinder 1. That means the cylindrical throttle ring 43 moves on the piston rod 60 between the axial stops 42a and 42b. The throttle ring 43 is fitted on its edge with two axial open guide grooves 44, through which axial arms 41 of the fork of the gear pivot 20 go to guide the throttle ring 43 during axial movement. The throttle ring 43 is fitted with a central hole 45; in its wall there is an inner groove 48, in which an O-ring is seated, forming a carrier 49 to carry the throttle ring in the direction in which the piston rod 60 moves. The piston rod 60 goes through the O-ring, overlapping it slightly, and due to overlapping the piston rod 60 carries the throttle ring 43 during its movement.

When the piston ring 60 moves, the throttle ring 43 is carried due to friction between a rubber O-ring and surface of the piston rod 60 in the direction of the piston rod 60. When the piston rod 60 is pushed in, the throttle ring 43 moves from the inner face of the gear pivot 20 towards the radial stumps 42 of the axial arms 41, being stopped by the axial stops 42a. When stopped by radial stumps 42, the throttle ring 43 is opposite to the radial connecting holes 35 in the wall of the working cylinder 1. In the starting position of the gear pivot 20, the axial arms 41 are rotated with advantage in right angle against connecting holes 35.

On the piston rod 60 between the throttle ring 43 and inner face of the gear pivot 20, there can be a spiral spring 46, which damps the shocks acting on the throttle ring 43 during sudden change of position of the piston 61. The spiral spring 46, arranged between the throttle ring 43 and the inner face of the gear pivot 20, is depressed during movement of the throttle ring 43 against pressure of the spiral spring 46. That is why resistance of the spiral spring 46 should be lower rather than friction between the piston rod 60 and O-ring arranged in the throttle ring 43. The depressed spiral ring 46 accelerates movement of the throttle ring 43 during its back-movement towards the axial stop 42a. The throttle ring 43 is fitted on its edge with two axial throttle recesses 47, which can be made with advantage as axial open grooves arranged opposite to each other in relation to the axis of the throttle ring 43.

If the throttle ring 43 is in the position against the connecting holes 35 rotated with the axial throttle recesses 47 outside the radial connecting holes 35, the edge of the throttle ring 43 closes the connecting holes 35 and flow of working medium between the working space 10 and outer storage space 33 is stopped. When the piston rod 60 is pushed in, the piston 61 decreases pressure in the working space 10 of the working cylinder 1 creating negative pressure, which acts against the pushing movement of the piston rod 60.

If the throttle ring 43 is in the position against the connecting holes 35 rotated with the axial throttle recesses 47 facing the radial connecting holes 35, the working space 10 of the working cylinder 1 is connected with the outer storage space 33, but flow of working medium between the working space 10 and outer storage space 33 is limited because flow of the working medium is throttled by the throttle recess 47. Side walls of the formed guide groove 31 in the control cylinder 30 gear with the radial pivot 20 of the of the gear pivot 20 to rotate the gear pivot 20, and the axial arms 41 of the fork of the gear pivot 20 gear with the throttle ring 43 to rotate the throttle ring 43. When the piston rod 60 moves, sliding of the piston rod 60 is transformed into rotation of the throttle ring 43. When the piston rod 60 is pushed in, the throttle ring 43 rotates with its axial throttle recesses 47 against the radial connecting holes 35, flow of the working medium through connecting holes 35 is throttled and speed of movement of the piston rod 60 is controlled. By forming in a suitable way the guide groove 31 of the cylinder 30 and by forming in a suitable way the throttle recess 47, it is possible to control speed of flow of the working medium through connecting holes 35 between the working space 10 and storage space 33, thus controlling speed of pushing the piston rod 60 in. According to Fig. 1 it is assumed that the guide groove is formed in the cylindrical wall of the control cylinder 30. The guide groove 31 can be formed also in the flat guide piece, because rotation angle of the radial pivot 21 of the gear pivot 20 is very small.

When the piston rod 60 is pulled out, the throttle ring 43 moves due to overpressure in the working chamber 10 against the outer storage space 33 from the radial stumps 42 towards the inner face of the gear pivot 20 to be stopped by its axial stop 42b. In the position of the throttle ring 43 between the radial connecting holes 35 and axial stop 42a, flow of the working medium between the working space 10 and outer storage space 33 is released and the piston rod 60 is pulled out without resistance. When pulling of the piston rod 60 stops, the throttle ring 43 returns due to strength of the spiral spring 46 to its initial position against the radial connecting holes 35. During re-pushing of the piston rod 60, the throttle ring 43 is carried in the direction of the pushed-in piston rod 60 also by strength caused by the O-ring, thus returning the throttle ring 43 to its initial position against the radial connecting holes 35. The pneumatic spring according to Fig. 1 is pushed in in a controlled way depending on the form of the guide groove 31 and it is pulled out freely without resistance.

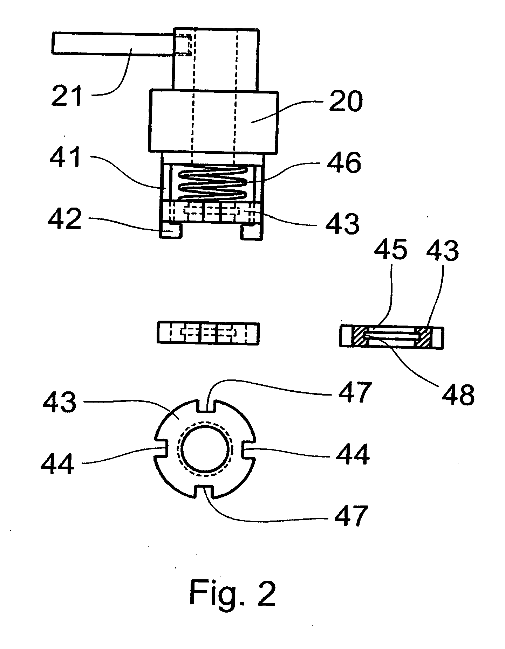

The set of the gear pivot 20 with the throttle ring 43 and spiral spring 46, depicted on Fig. 2, consists according to the upper part of Fig. 2 of a radial pivot 21, gear pivot 20, throttle ring 43 and spiral spring 46 arranged between the throttle ring 43 and inner face of the gear pivot 21. The throttle ring 43 is guided by the axial arms 41 of the gear pivot 20, terminated with the radial stumps 42. The lower part of Fig. 2 shows the design of the throttle ring 43 with two axial guide grooves 44 facing each other and two axial throttle recesses 47 facing each other, which have, for example, a form of through-grooves. The axial throttle recesses 47 should make it possible to interconnect the connecting hole 35 with the working space 10 of the working cylinder 1 according to Fig. 1 and they can be formed in a suitable way to eliminate the impact at the beginning or end of throttling and achieve the required progress of throttling. Between the throttle ring 43 and the inner face of the gear pivot 20, there is a spiral spring 46; its task is to accelerate shifting of the throttle ring 43 from the first working position facing the connecting holes 35 to the other releasing position outside the connecting holes 35, or vice versa. The depicted spiral spring 46 is not, however, necessary for the pneumatic spring to function according to the invention. In the central hole 45 of the throttle ring 43 there is an inner groove 48 for a non-depicted O-ring, which carries the throttle ring 43 in the direction of the piston rod 60.

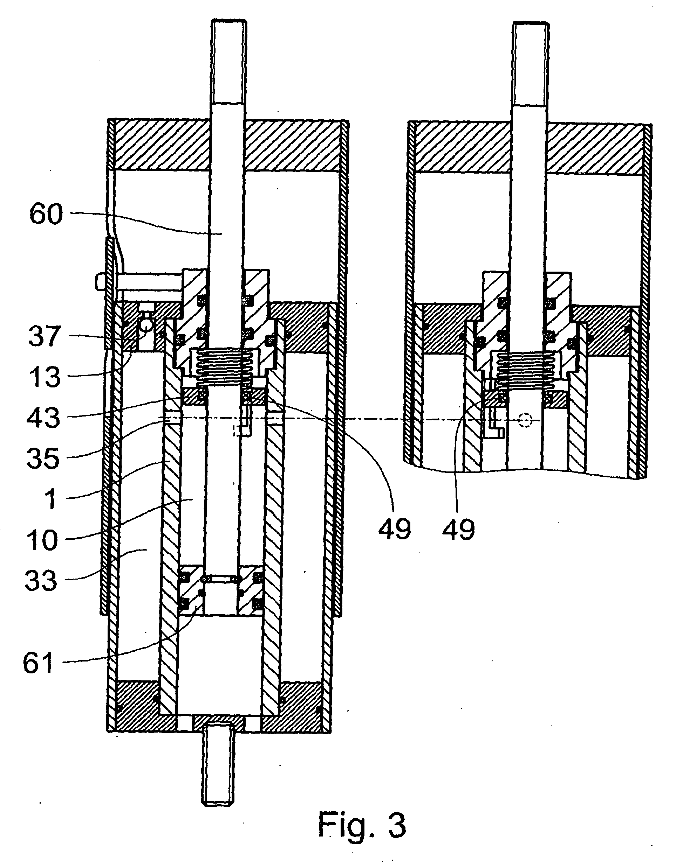

According to Fig. 3 the pneumatic spring with an overpressure working space 10 is depicted in partially pulled out position during pulling. The working space 10 and outer storage space 33 are filled with pressurized working medium, and in the second bottom 13 of the working cylinder 1 there is a pressurized return valve 37 closing the outer storage space 33. As soon as the piston 60 is pulled out of the working cylinder 1 due to external pulling power, the throttle ring 43 moves from the first working position facing the connecting holes 35 to the second releasing position outside the connecting holes 35 due to fraction between the piston rod 60 and the carrier consisting of the O-ring 49 installed in the throttle ring 43*.* By moving the throttle ring 43 from the first working position to the second releasing position, the connecting holes 35, which connect the working space 10 with the outer storage space 33, become fully open. The function of the throttle ring 43 is fully eliminated and the piston 60 is pulled without resistance out of the working cylinder 1 and working medium is released without resistance from the working space 10 to the outer storage space 33. The piston 60 is pulled out of the working cylinder 1 only against overpressure in the working space 10 and outer storage space 33. Incremental pressure, when the piston 61 is pulled out, depends on the ratio of the transversal cross-section of the piston 61 and size of the transversal cross-section of the piston rod 60 and volume of the outer storage space 33. To achieve high efficiency of the pneumatic spring with overpressure working space 10, the size of the transversal cross-section of the piston 61 should be considerably higher rather than the size of the transversal cross-section of the piston rod 60. Incremental pressure, when the piston 61 is pulled out, can be controlled by magnitude of overpressure in the outer storage space 33 and working space 10, which can be increased by feeding pressure medium through the hole 36 in the second bottom 13, which is fitted with a pressure return valve 37.

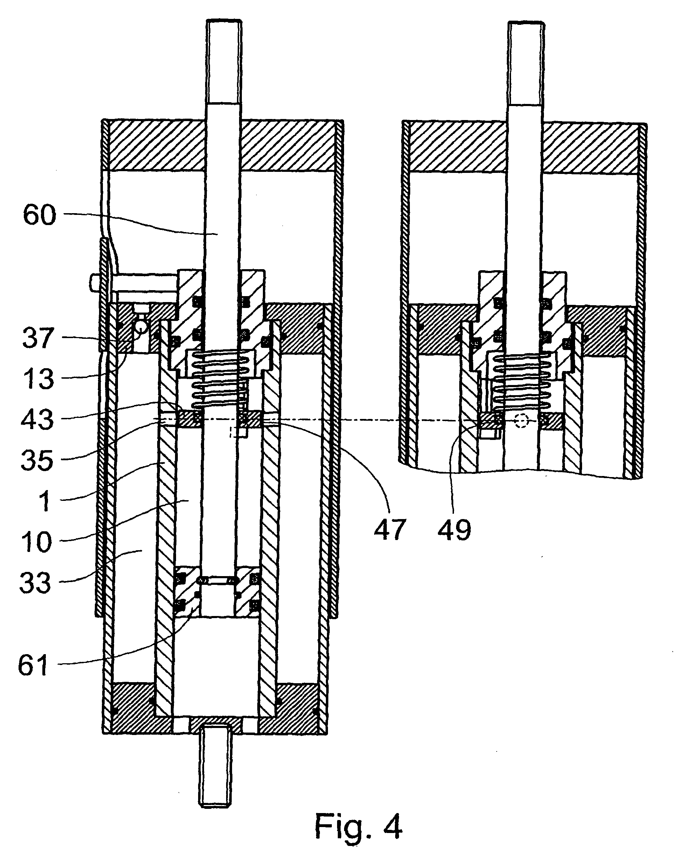

According to Fig. 4. the pneumatic spring with an overpressure working space 10 according to Fig. 3 is depicted in partially pushed in position during pushing. The working space 10 and outer storage space 33 are filled with pressurized working medium, and in the second bottom 13 of the working cylinder 1 there is a pressurized return valve 37 closing the outer storage space 33. As soon as the piston 61 stops being pulled out by external pulling power, the piston 61 is pushed in from any position due to overpressure of working medium on the side of the piston 61 in the working space 10. When the piston 61 is pushed in, the piston rod 60 carries the throttle ring in the direction of its movement, moving the throttle ring 43 to the first working position facing the connecting holes 35 in the wall of the working cylinder 1. Flow of working medium through the connecting holes 35 is limited to flow through the throttle recess 47 on the edge of the throttle ring 43. Because the gear pivot 20 is simultaneously rotated, flow of working medium through the connecting holes 35 is controlled, throttled by the piston 61 being pushed in, controlling also speed of the back-movement of the piston 61 being pushed in.

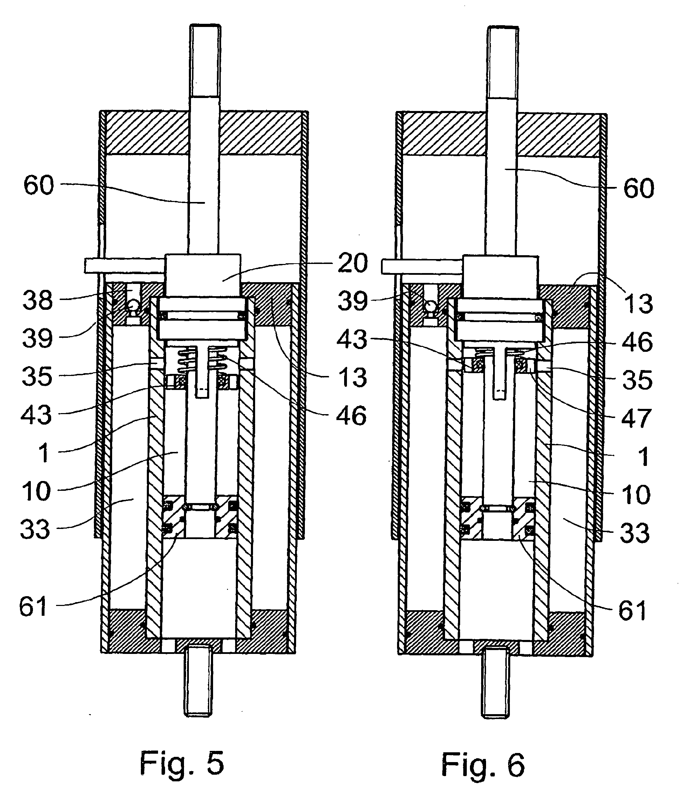

According to Fig. 5 the pneumatic.spring with a vacuum working space 10 is depicted in the working position of pushing-in. The working space 10 and outer storage space 33 are filled with lower pressure compared to the environment, and in the second circular bottom 13 there is a hole 38 to reduce pressure in the working space 10 using a negative pressure return valve 39, which closes the outer storage space 33. As soon as the piston 61 starts being pushed due to external pushing into the working cylinder 1, the throttle ring 43 moves from the working position facing the connecting holes 35 to the second releasing position outside the connecting holes 35 due to friction between the piston rod 60 and carrier consisting of an O-ring installed in the throttle ring 43. By moving from the first working position to the second releasing position, the connecting holes 35, which interconnect the working space 10 with the outer storage space 33, fully open. The function of the throttle ring 43 is fully eliminated. Moving of the throttle ring 43 from the first working position facing the connecting holes 35 into the second releasing position outside the connecting holes 35 is accelerated by the spiral spring 46 acting on the throttle ring 43 in the direction of its movement. The piston pushed into the working cylinder 1 due to external pushing increases negative pressure in the working space 10 of the working cylinder 1, which expands without resistance into the outer storage space 33 due to the released connecting holes 35. The piston 61 is pushed in only against resistance of negative pressure in the working space 10 and outer storage space 33.

According to Fig. 6 the pneumatic spring with a vacuum working space 10 is depicted, in the working position of pulling out. The working space 10 and outer storage space 33 are filled with lower pressure compared to the environment, and in the second bottom 13 of the working cylinder 1 there is a negative pressure return valve 39, which closes the outer storage space 33. As soon as the piston 61 stops being pushed due to external pushing, the piston 61 starts moving from any position due to negative pressure of working medium on the side of the piston 61 in the working space 10. When the piston 61 is pulled out, the piston rod 60 carries the throttle ring 43 in the direction of its movement, moving the throttle ring 43 to the first working position facing the connecting holes 35 in the wall of the working cylinder 1. The spiral spring 46, arranged between the throttle ring 43 and inner face of the radial pivot 20, becomes depressed during movement of the throttle ring 43 into the first working position. That is why resistance of the spiral spring 46 should be lower rather than friction between the piston rod 60 and the O-ring installed in the throttle ring 43. Flow of working medium through connecting holes 35 is limited to flow through the axial throttle recess 47 at the edge of the throttle ring 43. Because the gear pivot 21 is simultaneously rotated, flow of working medium through the connecting holes 35 is controlled, throttled by the piston 61 being pushed in, controlling also speed of the back-movement of the piston 61 being pulled out.

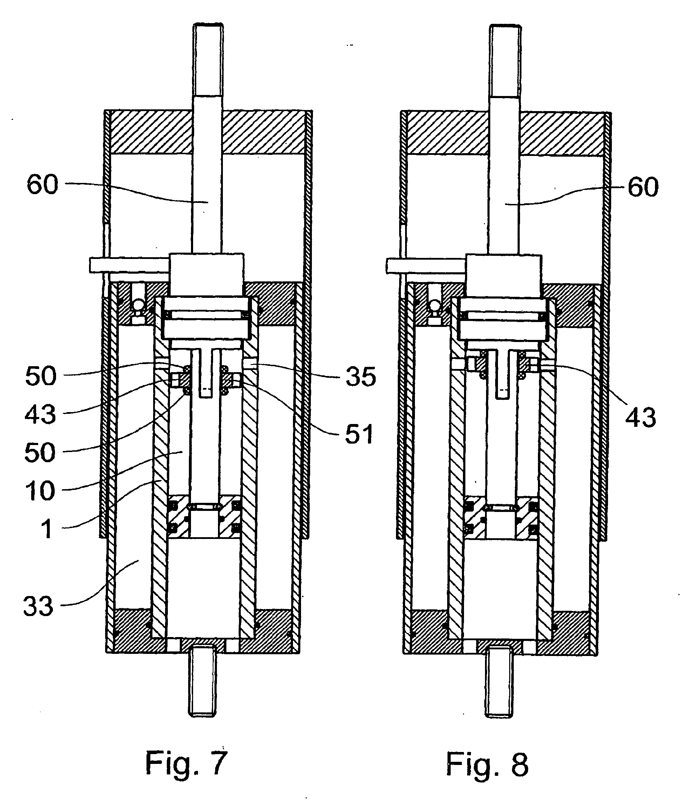

According to Fig. 7 the pneumatic spring with a vacuum working space 10 and a carrier consisting of outer rubber rings is depicted in the working position of pushing in. Unlike the exemplary designs above, the carrier carrying the throttle ring 43 in the direction of the piston rod 60 between the first working position and second releasing position consists of a pair of rubber outer rings 50, which are connected in a rubber distance rule 51. The pair of rubber outer rings 50 adjoins the opposite faces of the throttle ring 43. Alternatively, the position of the rubber outer rings 50 in relation to the throttle ring 43 can be fixed by geared catches, which are not depicted, connected to the opposite faces of the throttle ring 43. When the piston rod 60 is pushed in, the throttle ring 43 moves in the direction of movement of the piston rod 60 fully releasing the connecting holes 35 in the wall of the working cylinder 1. Thus, negative pressure in the working space 10 of the working cylinder 1 and storage space 33 keeps increasing. The piston rod 60 is pushed in by force.

According to Fig. 8 the pneumatic spring according to Fig. 7 is depicted in the working position of pulling out. When the piston rod 60 is pulled out, the throttle ring 43 moves in the direction of movement of the piston rod 60, closing the connecting holes 35 in the wall of the working cylinder 1, and flow of working medium through the connecting holes 35 is controlled by throttling during rotation of the throttle ring 43 like in the exemplary designs of the invention above.

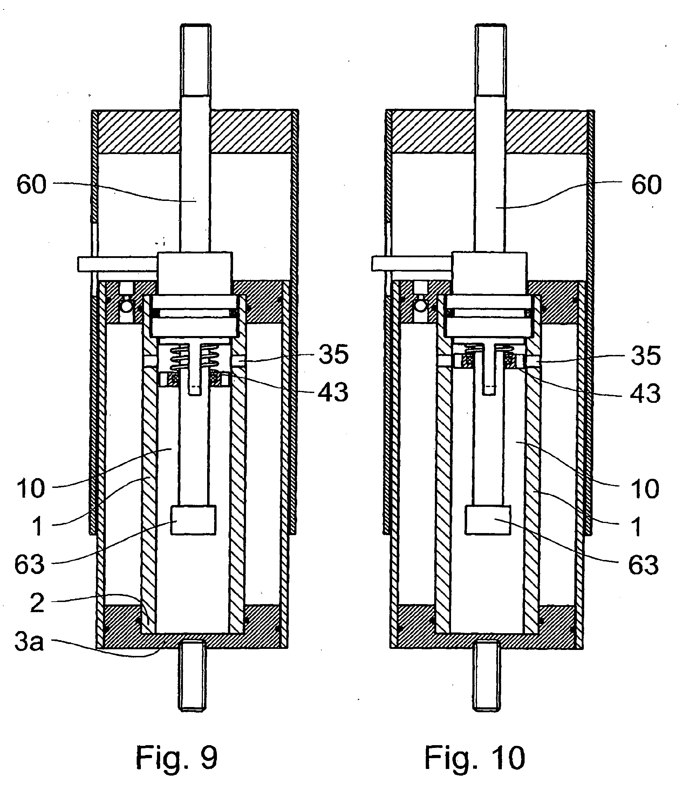

According to Fig. 9 and Fig. 10, the piston rod 60 reaching the working pressure space 10 is not fitted with a piston 61, but it is only terminated with a shoulder 63 to secure the piston rod 60 in the working cylinder 1. The first bottom 3a on the first end 2 of the working cylinder 1 should be closed. According to Fig. 9, pressure in the working cylinder 1 increases by the piston rod 60 being pushed in, and pushing is against force created by pressure in the working chamber 10. According to Fig. 10, the piston rod 60 is pulled out of the working space 10 due to overpressure in the working chamber 10 and the throttle ring 43 is adjusted to face the connecting holes 35 and flow of working medium through the connecting holes 35 are throttled due to its rotation.

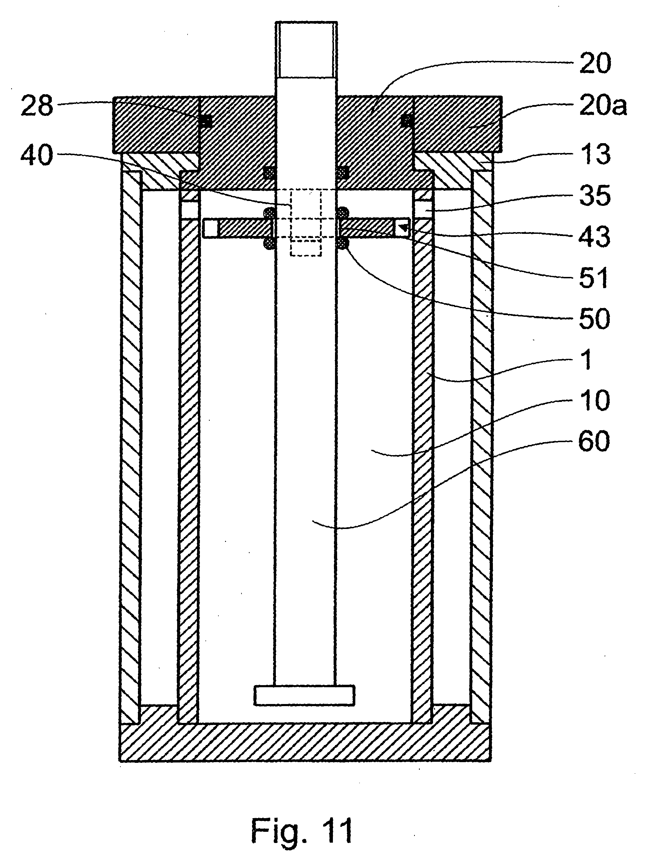

According to Fig. 11, in the bottom 13 of the second end of the working cylinder 1 there is a gear pivot 20 seated in a rotation way; going through the gear pivot is the piston rod 60. The gear pivot 20 is fitted with an outer ring 20a for manual rotation of the position, which can be arrested by suitable overlap of the outer ring 20a over the countersink in the bottom 13. When the gear pivot 20 is rotated, the throttle ring 43 is rotated by a fork 40 towards the connecting holes 35.

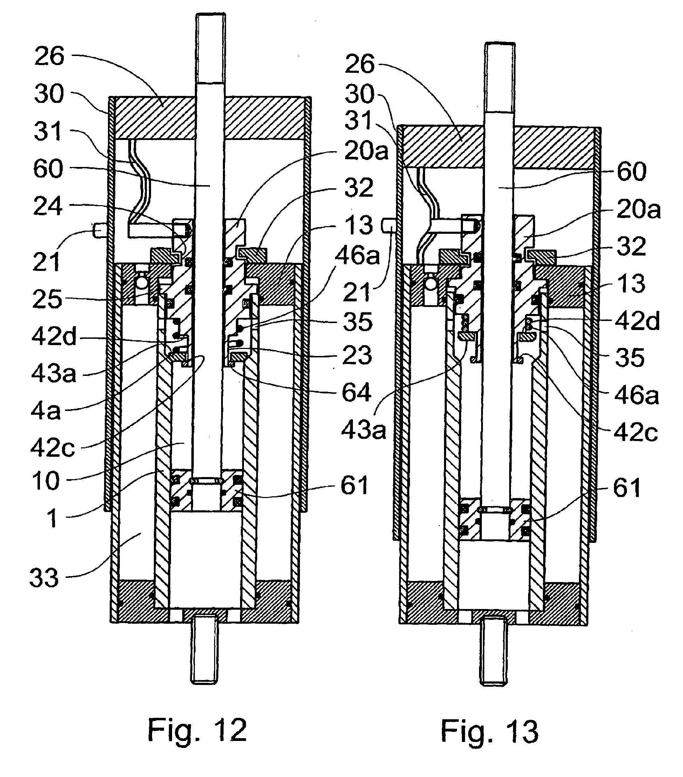

Figure 12 shows the pneumatic spring in a different exemplary design. The pneumatic spring according to Fig. 12 is depicted with the piston rod 60 pushed into in the limit position. In the end of the gear pivot 20a of the pneumatic spring, which reaches the working space 10, there is a distance groove 23 at the edge, of cylindrical form in this case. The distance groove 23 at the edge is limited on one side by the axial stop 42d, consisting of a shoulder face of the gear pivot 20a and, on the other side, an axial stop 42c formed on the distance ring 64, which is fixed into the end of the groove pivot 20a. A throttle ring 43a is installed in an axial sliding way on the gear pivot 20a in the space of the distance groove 23. The throttle ring 43a features a bevel, skewed edge surface, which seats in the lower position of the gear pivot 20a and with the throttle ring 43a seated on the axial stop 42c on the shoulder 4a of the wall of the working cylinder 1. The shoulder 4a is also beveled, of a skewed form. The throttle ring 43a seats in the lower position on the lower axial stop 42c of the gear pivot 20a, sealing the working space 10 and fully closing flow of working medium between the working space 10 and outer storage space 33. The gear pivot 20a is installed in the second bottom 13 of the working cylinder 1 both in a rotation and sliding way in the axial direction. The guide pin 32 is fixed to the bottom 13 and it reaches the skewed guide groove 24; that is why the rotating guide pin 32 also rises or descends in the axial direction. During axial movement the gear pivot 20a carries along the throttle ring 43a. Thus, turning of the gear pivot 20a controls very finely the distance between the throttle ring 43a and the skewed inner shoulder 4a of the working cylinder 1 and throttles very finely flow of working medium from the outer storage space 33 through the connecting holes 35 into the working space 10. Between the throttle ring 43a and the shoulder face on the gear pivot 43a there is a spiral spring 46a. The spiral spring 46a features sufficiently low rigidity and it is arranged to provide for transfer of the throttle ring 43a to the axial stop 42d. The spiral spring 46a can be long enough to push the throttle ring 46a to contact the stop 42c.

According to Fig. 13 the pneumatic spring according to Fig. 12 is depicted in the position of the piston rod 60 being pulled out. When the piston rod is pulled out, the throttle ring 43a moves in the direction of the piston rod 60 pulling towards the axial stop 42d. In the position of the throttle ring 43a in contact with the axial stop 42d, flow of working medium from the working space 10 through radial connecting holes 35 to the outer storage space 33 is fully released.

According to Fig. 12 and Fig. 13 the gear pivot 20a is installed in an axial sliding way between one lower limit position according to Fig. 12, in which the radial perimeter shoulder 25 of the gear pivot 20a contacts the face of the working cylinder 1 and the second central position in which the radial perimeter shoulder 25 of the gear pivot 20a contacts the inner face of the bottom 13 in the working cylinder 1. Axial movement of the gear pivot 20a is caused by rotation of the gear pivot 20a due to the radial pivot 21 gearing with the guide groove 31. By means of the edge guide groove 24 with axial rise reached by the guide pin 32 connected with the second end 12 of the working cylinder 1, rotation movement of the gear pivot 20a is transformed into axial movement. Similarly to the design according to Fig. 1, 3-10, rotation of the gear pivot 20a is due to the radial pivot 21 gearing with the guide groove 31 in the guide piece arranged in the control cylinder 30, which is connected with the piston rod 60 to rotate the gear pivot 20a. According to a possible design of the invention, which is not depicted on drawings, mobile thread can be made on the cylindrical perimeter of the gear pivot 20a and on the inner wall of the working cylinder 1 to transform rotation movement of the gear pivot 20a into axial movement, instead of the edge guide groove 24 and guide pin 32. When the gear pivot 20a moves to its lower position, when working medium flows from the storage space 33 to the working space 10, the throttle ring 43a moves to the lower position, seating with its skewed edge surface to the beveled skewed inner shoulder 4a of the working cylinder 1, and closes flow of working medium to the working space 10. Negative pressure in the working space 10 in relation to pressure in the outer storage space 33 continually slows down or stops the piston rod 60 and the piston 61 from being pushed into the working cylinder 1. That means the piston rod 60 is pushed in in a controlled way. Pushing in of the piston rod 60 is controlled in such a way that the gear pivot 20a is pulled out in a controlled way using the controls for axial movement of the gear pivot 20a, consisting of a guide groove 31, radial pivot 21, skewed guide groove 24 and guide pin 32, and draws away the throttle ring 43a from the inner shoulder 4a of the working cylinder 1. Working medium thus flows between the throttle ring 43a and the inner skewed shoulder 4a on the working cylinder 1, throttling flow. The clear opening enlarges until it achieves the size of the annular section between the throttle ring 43a and inner wall of the working cylinder 1.

When the piston rod 60 according to Fig. 13 is pulled out, pressure of working medium in the working space 10 increases and the throttle ring 43a is lifted from the inner shoulder 4a. When the piston rod 60 is pulled out, the gear pivot 20a rotates and moves axially, not affecting flow of working medium from the working space 10 to the outer storage space 33. Like in the design according to Fig. 3-10, the working space can be filled with vacuum. In the negative-pressure design, the pneumatic spring is depressed freely and speed of expansion of the pneumatic spring is controlled.

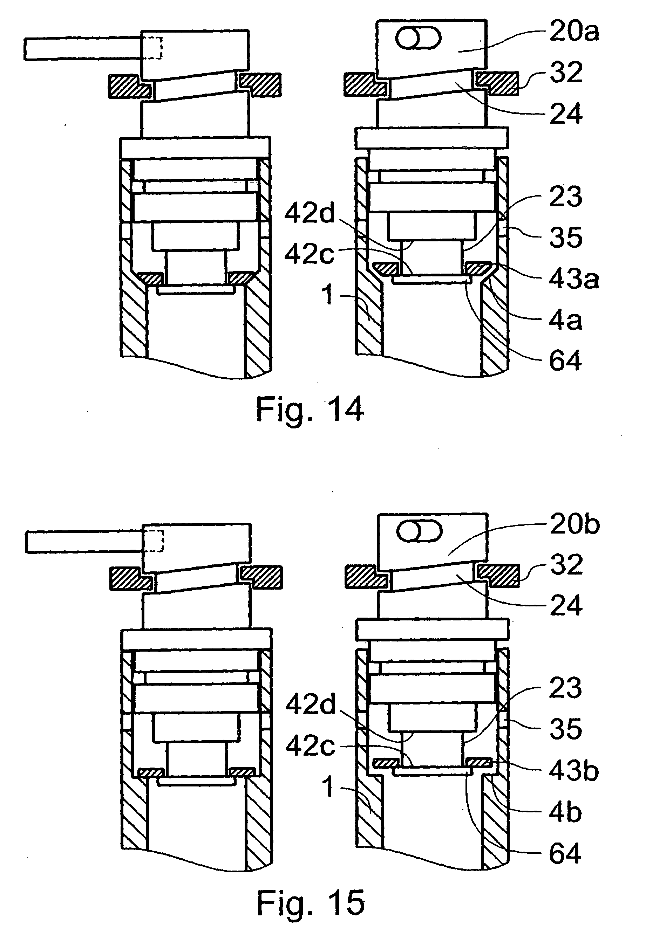

Figure 14 shows in a longitudinal cross-section of the gear pivot according to Fig. 12 a throttle ring 43a installed in the distance groove 23 of cylindrical form, namely in two positions: To the left, in the lower position of the gear pivot 20a with a throttle ring 43a with a beveled outer edge seating on a beveled skewed inner shoulder 4a, and to the right, in the risen position of the gear pivot 20a in which the throttle ring 43a is drawn away from the beveled skewed inner shoulder 4a. In the lower position of the gear pivot 20a and lower position of the throttle ring 43a according to the left part of Fig. 14, the throttle ring 43a seats with its edge surface on the skewed seating surface 4a of the inner shoulder on the working cylinder, closing flow of working medium between the working space and outer storage space, which is not depicted. Axial movement of the gear pivot is done using the same means like in Fig. 12 and Fig. 13, though using the guide pin 32 and skewed guide groove 24. In the position of the throttle ring 43a according to Fig. 14 to the right, working medium flows through the edge gap between the outer edge of the throttle ring 43a and inner wall of the working cylinder. When pressure of working medium in the working space increases the throttle ring 43a moves to the axial stop 42d and flow of the working medium between the working space and non-depicted outer storage space is quite free.

Figure 15 shows a longitudinal cross-section of the gear pivot according to Fig. 14, but with a throttle ring 43b of cylindrical form, which is installed in the distance groove 23 of cylindrical form between two axial stops 42c on the distance rings 64 and 42d on the face of the shoulder on the gear pivot 20a. The inner shoulder 4b of the working cylinder 1 is made as rectangular recess of cylindrical form receiving the face of the throttle ring 43b on the axial seating surface of the inner shoulder 4b. In the lower position of the gear pivot 20a and lower position of the throttle ring 43b, the throttle ring 43b seats with its face on the axial face of the cylindrical inner shoulder 4b on the working cylinder 1, closing flow of working medium between the working space and outer storage space, which is not depicted. When the gear pivot 20b rises, the throttle ring 43b is drawn away from the shoulder 4b and working medium flows through the edge gap between the outer edge of the throttle ring 43a and inner wall of the working cylinder. When pressure of working medium in the working space increases the throttle ring 43b moves to the axial stop 42d and flow of working medium between the working space and outer storage space, which is not depicted, is quite free.

Exemplary designs depicted on figures are not complete. According to another possible design of the invention, the piece with a guide groove guiding the radial pivot protruding out of the gear pivot can be flat and it can be, along with the free end of the piston rod, connected with a common support. The flat piece with a flat guide groove is possible because the rotation angle of the gear pivot is several degrees only, and the radial pivot of the gear pivot is guided reliably by a flat guide groove within the scope of rotation of the gear pivot up to 8-10 degrees. The carrier carrying the throttle ring, which consists of an O-ring arranged between the piston rod and throttle ring, can be partially or fully replaced with an axial gap or axial throttle bore in the throttle ring. When the piston is pulled out due to external pulling according to Fig. 3, the throttle ring moves to the other release position due to overpressure on the side of the throttle ring towards the piston, in which position it remains until pressures between the space on the ring facing the gear pivot and space on the opposite face of the throttle ring becomes equal. Then, the throttle ring returns to the first working position due to acting of the spiral spring and remains in that position during the subsequent pushing-in of the piston.

### Industrial Applicability

The pneumatic spring according to the invention can be used to suspend car wheels in the car-making industry, control mechanic door-checks, and for any other devices that need controlled damping of back-motion.

### List of Parts

- 1: Working cylinder
- 2: First end (of the working cylinder)
- 3: Bottom (working cylinder first bottom)
- 3a: Bottom (working cylinder first bottom)
- 4: Inner recess (in the working cylinder)
- 4a: Oblique inner recess (in the working cylinder)
- 4b: Rectangular inner recess (in the working cylinder)
- 5: Interconnection hole
- 6: First end (of the outer cylinder)
- 7: Outer cylinder
- 8: Sealing
- 9: Sealing
- 10: Working area
- 11: Coupling pin
- 12: Second end (of the working cylinder)
- 13: Bottom (working cylinder second bottom)
- 14: Countersink (in the second bottom)
- 15: Central hole (in the second bottom 13)
- 16: Second end (of the outer cylinder)
- 17: Countersink
- 18: Sealing
- 19: Sealing
- 20: Gear pivot
- 20a: Gear pivot
- 21: Radial pivot
- 22: Central hole (in the gear pivot)
- 23: Distance groove (circumferential distance groove)
- 24: Guide groove (oblique guide groove)
- 25: Edge recess (of the gear pivot 20a)
- 26: Bottom
- 27: Mobile sealing
- 28: Sealing
- 29: Sealing
- 30: Control cylinder
- 31: Guide groove
- 32: Guide pin
- 33: Storage area
- 34:
- 35: Connecting hole
- 36: Feeding hole
- 38: Hole (vacuum hole)
- 39: Return valve
- 40: Fork
- 41: Axial arm.
- 42: Radial stump
- 42a: Axial stop
- 42b: Axial stop
- 42c: Axial stop
- 42d: Axial stop
- 43: Throttle ring
- 43a: Throttle ring
- 43b: Throttle ring
- 44: Guide groove
- 45: Central hole
- 46: Spiral spring
- 46a: Spiral spring
- 47: Throttle recess
- 48: Inner groove (of the throttle ring)
- 49: Carrier
- 50: Outer ring
- 51: Rule
- 60: Piston rod
- 61: Piston
- 63: Shoulder
- 64: Distance ring

## Claims

1. A pneumatic spring, consisting of a hollow working cylinder (1) with a first end (2) being adapted for fixing to one suspended object and with a second end (12) being closed, a sealed piston rod (60) going through this second end (12), one free end of the sealed piston rod (60) going out of the working cylinder (1) is adapted for fixing to a second suspended object and the second free end extending into a working space (10) of the working cylinder (1), the working space (10) being closed with the bottom (3) of the working cylinder (1) first end (2) or with a piston (61) connected with the second free end of the piston rod (60) and interconnected through interconnection holes (35) of the working cylinder (1) with an outer storage space (33) of a work medium,
**characterised in that**
a cylindrical gear pivot (20) is seated coaxially with the piston rod (60) in the second end (12) of the working cylinder (1), the end of the gear pivot (20) going out of the second end of the working cylinder (1) is fitted with actuating means for rotating and/or axially moving the gear pivot (20), and the other end of the gear pivot (20) extending into the working space (10) is fitted with axial stops (42a, 42b, 42c, 42d) to define the axial movement of a throttle ring (43, 43a, 43b) seated on the gear pivot (20, 20a) or on,the piston rod (60) for movement between a first position to close the work medium flow between the working space (10) and outer storage space (33) and a second position to release the working medium flow between the working space (10) and outer storage space (33).

2. A pneumatic spring according to claim 1,
**characterised** b y that
the throttle ring (43a, 43b) is seated to slide on the end of the gear pivot (20a), the end of the gear pivot (20a) interfering into the working space(10), the throttle ring (43a, 43b) seating between the axial stops (42c, 42d), and with its tapered outer perimeter or face, in the position closing the working medium flow, bearing to the inner shoulder (4a, 4b) of the working cylinder (1), the inner shoulder (4a, 4b) arranged between the piston (61) or bottom (3) and interconnection holes (35) wherein the end of the gear pivot (20a) going out of the working cylinder (1) is provided with actuating means to axially move the gear pivot (20a).

3. A pneumatic spring according to claim 2,
**characterised by that**
the actuating means for axial moving of the gear pivot (20a) are formed by a radial pivot (21) reaching into the guide groove (31) of the sliding-bloc guide connected with the piston rod (60) for rotation of the gear pivot (20a) and by the peripheral guide groove (31) with axial rise, the peripheral guide groove (31) interfered by a guide pin (32) connected with the second end (12) of the working cylinder (1) to transform the rotation movement of the gear pivot (20a) to axial movement.

4. A pneumatic spring according to claim 1,
**characterised by that**
the throttle ring (43) seated in a sliding and rotation way on the pivot rod (60) is in gear with the end of the gear pivot (2é) interfering with the working space (10) for rotating the throttle ring (43) and the interconnection holes (35) are arranged in the working cylinder (1) wall opposite to the throttle ring (43) in one of its limit positions between axial stops (42a, 42b) wherein the end of the gear pivot (20) going out of the working cylinder (1) is fitted with actuating means to rotate the gear pivot (20).

5. A pneumatic spring according to claim 4,
**characterised by that**
the end of the gear pivot (20) interfering into the working cylinder (1) is fitted with axial forks (41), which go through the axial guide grooves (44) of the throttle ring (43), being provided on their free ends with radial projections (42) for the axial stop of the throttle ring (43).

6. A pneumatic spring according to claim 4 or 5,
**characterised by that**
the actuating means for rotating the gear pivot (20) are formed by a radial pivot (21) interfering into the guide groove (31) of the sliding-bloc guide connected with the piston rod (60).

7. A pneumatic spring according to any of the claims 1, 2, 4, 5,
**characterised by that**
the throttle ring (43, 43a, 43b) is fitted with a carrier for carrying in the direction of the movement of the piston rod (60).

8. A pneumatic spring according to claim 7,
**characterised by that**
the carrier for carrying of the throttle ring (43, 43a, 43b) is formed by a rubber O-ring (49) arranged between the throttle ring (43, 43a, 43b) and the piston rod (60).

9. A pneumatic spring according to claim 3 or 6,
**characterised by that**
the sliding-bloc guide is formed in the actuating cylinder (30), the bottom (26) of which is fixed to a free end of the piston rod (60) going out of the working cylinder (1).

10. A pneumatic spring according to any of the claims 1 - 9,
**characterised by that**
the working space (10) of the working cylinder (1) is filled with pressurized working medium.

11. A pneumatic spring according to any of the claims 1 - 9,
**characterised by that**
the working space (10) of the working cylinder (1) is vacuum.

## Patentansprüche

1. Eine Gasdruckfeder, gebildet von einem hohlen Arbeitszylinder (1) mit einem ersten Ende (2) eingerichtet zur Befestigung an einem gefederten Gegenstand und mit einem geschlossenen zweiten Ende (12), das abgedichtet eine Kolbenstange (60) durchläuft, deren ein freies aus dem Arbeitszylinder (1) ragendes Ende zur Befestigung an einem zweiten gefederten Gegenstand eingerichtet ist, das zweite freie Ende in den Arbeitsbereich (10) des Arbeitszylinders (1) eingreift, der Arbeitsbereich (10) durch einen Boden (3) des ersten Endes (2) des Arbeitszylinders (1) oder durch einen mit dem zweiten freien Ende der Kolbenstange (60) verbundenen Kolben (61) verschlossen ist und durch Verbindungsöffnungen (35) des Arbeitszylinders (1) mit einem äußeren Vorratsspeicher (33) des Arbeitsmediums verbunden ist,
**dadurch gekennzeichnet, dass**
im zweiten Ende (12) des Arbeitszylinders (1), koaxial mit der Kolbenstange (60) ein runder Übertragungsbolzen (20) angebracht ist, dessen aus dem Arbeitszylinder (1) ragendes Ende, mit Betätigungsmittel zum Drehen und/oder für einen axialen Vorschub des Übertragungsbolzen (20) versehen ist und dessen zweites in den Arbeitsbereich (10) eingreifendes Ende mit Axialanschlägen (42a, 42b, 42c, 42d) für Begrenzung der axialen Bewegung eines auf dem Übertragungsbolzen (20, 20a) oder auf der Kolbenstange (60) gelagerten Drosselrings (43, 43a, 43b) für Bewegung zwischen einer ersten Position zum Sperren des Flusses des Arbeitsmediums zwischen dem Arbeitsbereich (10) und dem äußeren Vorratsspeicher (33) und einer zweiten Position zur Freigabe des Flusses des Arbeitsmediums zwischen dem Arbeitsbereich (10) und dem äußeren Vorratsspeicher (33).

2. Die Gasdruckfeder nach Anspruch 1,
**dadurch gekennzeichnet, dass**
der Drosselring (43a, 43b) am Ende des in den Arbeitsbereich (10) eingreifenden Übertragungsbolzens (20a) und zwischen den Axialanschlägen (42c, 42d) gelagert ist und mit seinem abgeschrägten Außenumfang oder mit der Stirnfläche in der Stellung für Versperrung des Flusses des Arbeitsmediums in Bezug auf die Innenbestückung (4a, 4b) des Arbeitszylinders (1), die zwischen dem Kolben (61) oder dem Boden (3) und den Verbindungsöffnungen (35) angeordnet ist, wobei das Ende des Übertragungsbolzens (20a), das aus dem Arbeitszylinder (1) ragt, mit Betätigungsmittel für den axialen Vorschub des Übertragungsbolzens (20a) versehen ist.

3. Die Gasdruckfeder nach Anspruch 2,
**dadurch gekennzeichnet, dass**
die Betätigungsmittel für den axialen Vorschub des Übertragungsbolzens (20a) einerseits von einem Radialbolzen(21) gebildet werden, der in eine Führungsrille (31) der Führungskulisse eingreift, die mit der Kolbenstange (60) zum Drehen des Übertragungsbolzens (20a) verbunden ist, und andererseits von der peripheren Führungsrille (31) mit Axialsteigung, in die ein Führungsbolzen (32) eingreift, der mit dem zweiten Ende (12) des Arbeitszylinders (1) zur Übertragung der Drehbewegung des Übertragungsbolzens (20a) auf den Axialvorschub verbunden ist.

4. Die Gasdruckfeder nach Anspruch 1,
**dadurch gekennzeichnet, dass**
der Drosselring (43), der beweglich und drehbar auf der Kolbenstange (60) gelagert ist, sich im Eingriff mit dem Ende des Übertragungsbolzens (20) befindet, das in den Arbeitsbereich (10) zum Verdrehen des Drosselrings (43) eingreift, und die Verbindungsöffnungen (35) in der Wand des Arbeitszylinders (1) gegenüber dem Drosselring (43) in einer seiner Grenzlagen zwischen den Axialanschlägen (42a, 42b) angeordnet sind, wobei das Ende des Übertragungsbolzens (20), das aus dem Arbeitszylinder (1) ragt, mit Betätigungsmittel für Drehen des Übertragungsbolzens (20) bestückt ist.

5. Die Gasdruckfeder nach Anspruch 4,
**dadurch gekennzeichnet, dass**
das Ende des Übertragungsbolzens (20), das in den Arbeitszylinder (1) eingreift, mit Axialgabeln (41) versehen ist, die axiale Führungsrillen (44) des Drosselrings (43) durchlaufen und an ihren freien Enden mit Radialvorsätzen (42) für den axialen Anschlag des Drosselrings (43) versehen sind.

6. Die Gasdruckfeder nach Ansprüchen 4 oder 5,
**dadurch gekennzeichnet, dass**
die Betätigungsmittel zum Drehen des Übertragungsbolzens (20) von einem Radialbolzen (21) gebildet werden, der in die Führungsrille (31) der mit der Kolbenstange (60) verbundenen Führungskulisse eingreift.

7. Die Gasdruckfeder nach Ansprüchen 1, 2, 4 oder 5,
**dadurch gekennzeichnet, dass**
der Drosselring (43, 43a, 43b) mit einem Mittel für Mitnahme in der Bewegungsrichtung der Kolbenstange (60) versehen ist.

8. Die Gasdruckfeder nach Anspruch 7,
**dadurch gekennzeichnet, dass**
das Mitnahmemittel zur Mitnahme des Drosselrings (43, 43a, 43b) von einem O-Ring (49) aus Gummi gebildet ist, der zwischen dem Drosselring (43, 43a, 43b) und der Kolbenstange (60) angeordnet ist.

9. Die Gasdruckfeder nach Anspruch 3 oder 6,
**dadurch gekennzeichnet, dass**
die Führungskulisse im Bedienungszylinder (30) gebildet wird, dessen Boden (26) fest mit dem freien Ende der Kolbenstange (60) verbunden ist, das aus dem Arbeitszylinder (1) ragt.

10. Die Gasdruckfeder nach Ansprüchen 1 bis 9,
**dadurch gekennzeichnet, dass**
der Arbeitsbereich (10) des Arbeitszylinders (1) mit komprimiertem Arbeitsmedium gefüllt ist.

11. Die Gasdruckfeder nach Ansprüchen 1 bis 9,
**dadurch gekennzeichnet, dass**
sich der Arbeitsbereich (10) des Arbeitszylinders (1) durch Unterdruck auszeichnet.

## Revendications

1. La suspension pneumatique, constituée d'un cylindre de travail (1) creux avec une première extrémité (2) adaptée pour être fixée à un objet à ressorts et avec une seconde extrémité (12) fermée par laquelle passe par obturation une tige de piston (60), dont une extrémité libre sortant du cylindre de travail (1) est adaptée pour être fixée à un deuxième objet à ressorts et la seconde extrémité libre intervient dans l'espace de travail (10) du cylindre de travail (1), l'espace de travail (10) est fermé par le fond (3) de la première extrémité (2) du cylindre de travail (1) ou par le piston (61) assemblé à la seconde extrémité libre de la tige de piston (60) et relié par les orifices de raccordement (35) du cylindre de travail (1) à l'espace extérieur de réserve (33) du médium de travail,
**caractérisé en ce que**
dans la seconde extrémité (12) du cylindre de travail (1) est placée dans une position coaxiale avec la tige de piston (60) un tourillon de cylindre de transmission (20), dont l'extrémité sortant du cylindre de travail (1) est munie d'outils de commande pour faire tourner et/ou glisser dans l'axe le tourillon de transmission (20) et dont la seconde extrémité intervenant dans l'espace de travail (10) est munie de butées axiales (42a, 42b, 42c, 42d) pour délimiter le mouvement axial de l'anneau d'étranglement (43, 43a, 43b) placé sur le tourillon de transmission (20, 20a) ou la tige de piston (60) pour passer de la première position pour fermer l'écoulement du médium de travail entre l'espace de travail (10) et l'espace extérieur de réserve (33) à la seconde position pour libérer l'écoulement du médium de travail entre l'espace de travail (10) et l'espace extérieur de réserve (33).

2. La suspension pneumatique selon l'exigence 1,
**caractérisé en ce que**
l'anneau d'étranglement (43a, 43b) est placé en étant coulissé à l'extrémité du tourillon de transmission (20a) intervenant dans l'espace de travail (10), entre les butées axiales (42c, 42d) et son pourtour extérieur biaisé ou la surface frontale dans la position de fermeture de l'écoulement du médium de travail sur la fixation intérieure (4a, 4b) du cylindre de travail (1) agencées entre le piston (61) ou le fond (3) et les orifices de raccordement (35), en même temps que l'extrémité du tourillon de transmission (20a) sortant du cylindre de travail (1) est munie d'outils de commande pour faire glisser dans l'axe le tourillon de transmission (20a).

3. La suspension pneumatique selon l'exigence 2,
**caractérisé en ce que**
les outils de commande pour faire glisser dans l'axe le tourillon de transmission (20a) sont composés d'une part d'un tourillon radial (21) intervenant dans la rainure de guidage (31) qui conduit les coulisses reliées à la tige de piston (60) pour faire tourner le tourillon de transmission (20a) et d'autre part d'une rainure périphérique de guidage (31) à la pente axiale dans laquelle intervient le tourillon de guidage (32) relié à la deuxième extrémité (12) du cylindre de travail (1) pour faire passer le tourillon de transmission (20a) d'un mouvement rotatif à un glissement axial.

4. La suspension pneumatique selon l'exigence 1,
**caractérisé en ce que**
l'anneau d'étranglement (43) placé de façon coulissante et pivotante sur la tige de piston (60) est dans la prise avec l'extrémité du tourillon de transmission (20) intervenant dans l'espace de travail (10) pour faire tourner l'anneau d'étranglement (43), et les orifices de raccordement (35) sont rangés dans la paroi du cylindre de travail (1) contre l'anneau d'étranglement (43) dans une de ses positions extrêmes entre les butées axiales (42a, 42b), en même temps que l'extrémité du tourillon de transmission (20) sortant du cylindre de travail (1) est munie d'outils de commande pour faire tourner le tourillon de transmission (20).

5. La suspension pneumatique selon l'exigence 4,
**caractérisé en ce que**
l'extrémité du tourillon de transmission (20) intervenant dans le cylindre de travail (1) est munie de fourchettes (41) axiales qui passent par les rainures axiales de guidage (44) de l'anneau d'étranglement et sont munies à leurs extrémités libres d'avancées radiales (42) pour une arrivée axiale de l'anneau d'étranglement (43).

6. La suspension pneumatique selon l'exigence 4 ou 5,
**caractérisé en ce que**
les outils de commande pour faire tourner le tourillon de transmission (20) sont composés d'un tourillon (21) radial intervenant dans la rainure de guidage (31) conduisant les coulisses reliées à la tige de piston (60).

7. La suspension pneumatique selon les exigences 1, 2, 4, 5,
**caractérisé en ce que**
l'anneau d'étranglement (43, 43a, 43b) est muni d'un outil pour faire porter dans le sens du mouvement de la tige de piston (60).

8. La suspension pneumatique selon l'exigence 7,
**caractérisé en ce que**
l'outil porteur pour faire porter l'anneau d'étranglement (43, 43a, 43b) est composé d'un anneau-O (49) en caoutchouc agencé entre l'anneau d'étranglement (43, 43a, 43b) et la tige de piston (60).

9. La suspension pneumatique selon l'exigence 3 ou 6,
**caractérisé en ce que**
la coulisse de guidage est formée dans le cylindre de commande (30) dont le fond (26) est solidement relié à l'extrémité libre de la tige de piston (60) sortant du cylindre de travail (1).

10. La suspension pneumatique selon une des exigences 1 à 9,
**caractérisé en ce que**
l'espace de travail (10) du cylindre de travail (1) est rempli du médium de travail comprimé.

11. La suspension pneumatique selon une des exigences 1 à 9,
**caractérisé en ce que**
l'espace de travail (10) du cylindre de travail (1) est à dépression.
